# EUROPEAN PATENT APPLICATION

(11) **EP 3 410 255 A1**
(43) Date of publication of application: **05.12.2018**
(21) Application number: 17174095.4
(22) Date of filing: 01.06.2017
(51) Int. Cl.: G06F 1/32, G04G 21/02

(54) **METHOD AND APPARATUS FOR OPERATING AN ELECTRONIC DEVICE**

(71) Applicant: Vestel Elektronik Sanayi ve Ticaret A.S., 45030 Manisa (TR)
(72) Inventor: SARIARSLAN, Muhammet Kürsat, 45030 Manisa (TR); AKDEMIR, Onur, 45030 Manisa (TR)
(74) Representative: Flint, Adam

(57) **Abstract**

A method of operating an electronic device (1) includes when the electronic device (1) is in an inactive state: obtaining a measure of a first temperature of the electronic device (1), corresponding to a temperature of a surface of the electronic device (1) touched by a user; and obtaining a measure of a second temperature of the electronic device (1). The first temperature and the second temperature are compared. The electronic device (1) is activated if a difference between the first temperature and the second temperature is larger than a predetermined threshold. Apparatus for carrying out the method is also disclosed.

## Description

### Technical Field

The present disclosure relates to a method and apparatus for operating an electronic device.

### Background

Electronic devices, such as mobile phones, tablet computers etc., can switch or be switched to an inactive state (e.g. a standby mode) when not in use in order to prevent or reduce battery power consumption. Some electronic devices are configured to automatically switch to an inactive state after not being used for a pre-determined period of time. The inactive state typically switches off power-intensive functions such as the mobile phone's display. This reduces battery power consumption and thus prolongs the life of the battery in the electronic device. Such electronic devices need to be capable of being brought out of their inactive state and into their active state when they are required to be used.

### Summary

According to a first aspect disclosed herein, there is provided a method of operating an electronic device, the method comprising: when the electronic device is in an inactive state: obtaining a measure of a first temperature of the electronic device corresponding to a temperature of a surface of the electronic device touched by a user; obtaining a measure of a second temperature of the electronic device corresponding to an ambient temperature of the electronic device; comparing the first temperature and the second temperature; and activating the electronic device if a difference between the first temperature and the second temperature is larger than a predetermined threshold.

This allows for a user to put an electronic device into an inactive state and then easily, intuitively and reliably, re-activate the electronic device into its active state. In addition, disadvantages associated with the prior art are addressed. For example, due to the use of a temperature difference in determining whether the electronic device should be activated, the electronic device may be less likely to activate unintentionally or accidentally, which would lead to undesirable battery power consumption.

In an example, the method comprises: when the electronic device is in an inactive state and the difference between the first temperature and the second temperature is smaller than a predetermined threshold: repeating the steps of obtaining a measure of the first temperature of the electronic device; obtaining a measure of the second temperature of the electronic device; comparing the first temperature and the second temperature; and activating the electronic device if a difference between the first temperature and the second temperature is larger than a predetermined threshold.

In an example, the method comprises when the electronic device is in an active state: obtaining a measure of a first temperature of the electronic device corresponding to a temperature of a surface of the electronic device touched by a user; obtaining a measure of a second temperature of the electronic device; comparing the first temperature and the second temperature; and deactivating the electronic device if a difference between the first temperature and the second temperature is smaller than a pre-determined threshold.

According to a second aspect disclosed herein, there is provided apparatus for operating an electronic device, the apparatus comprising: a first temperature sensor constructed and arranged to obtain a measure of a first temperature of the electronic device corresponding to a temperature of a surface of the electronic device touched by a user; a second temperature sensor constructed and arranged to obtain a measure of a second temperature of the electronic device corresponding to an ambient temperature of the electronic device; and a controller configured to: compare the first temperature and the second temperature; and, when the electronic device is an inactive state, activate the electronic device if a difference between the first temperature and the second temperature is larger than a pre-determined threshold.

In an example, the controller is configured to: when the electronic device is in an inactive state and the difference between the first temperature and the second temperature is smaller than a pre-determined threshold, compare a new first temperature and a new second temperature; and activate the electronic device if a difference between the new first temperature and the new second temperature is larger than a pre-determined threshold.

In an example, the controller is configured to: when the electronic device is in an active state, compare a first temperature and a second temperature; and deactivate the electronic device if a difference between the first temperature and the second temperature is smaller than a pre-determined threshold.

According to a third aspect disclosed herein, there is provided an electronic device comprising apparatus as described above.

In an example, the electronic device has a front face having a display screen and a rear face, and the first temperature sensor is located at the rear face of the electronic device, when in a normal orientation in normal use.

In an example, the second temperature sensor is located at the front face of the electronic device.

In an example, the second temperature sensor is located at or towards the top edge of the device when in a normal orientation in normal use.

### Brief Description of the Drawings

To assist understanding of the present disclosure and to show how embodiments may be put into effect, reference is made by way of example to the accompanying drawings in which:
Figure 1 shows schematically a longitudinal section of an example of an electronic device;
Figure 2 shows schematically a view of the front face of an example of an electronic device; and
Figure 3 shows a flow diagram illustrating an example of a method of operating an electronic device.

### Detailed Description

Electronic devices may switch or be switched to an inactive state, such as a standby mode or a sleep mode, when not in use in order to reduce battery power consumption. Therefore, electronic devices must be capable of being activated or reactivated from the inactive state mode when they are required to be used.

In the prior art, electronic devices may be activated via an inbuilt touch sensor or via an inbuilt proximity sensor. For example, a resistive touch sensor or a capacitive sensor may be used. A controller activates an electronic device when the touch sensor detects contact, for example by a user, or when the proximity sensor detects an object, such as a user or a user's finger, etc., within a pre-determined proximity of the proximity sensor.

However, there are problems associated with these known methods of activating an electronic device. When using a touch or proximity sensor, an electronic device may not be activatable in certain circumstances, such as when a user is wearing a glove on their hand. This is particularly a problem when using a capacitive touch sensor. This lack of reliability and consistency in activating an electronic device is frustrating for a user. In addition, when using a known touch or proximity sensor, an electronic device may be activated accidentally in certain circumstances, such as when the electronic device in stored in a pocket of a user's clothing or a bag or the like. This accidental activation causes the electronic device to use battery power when it should be in an inactive state because it is not required to be used.

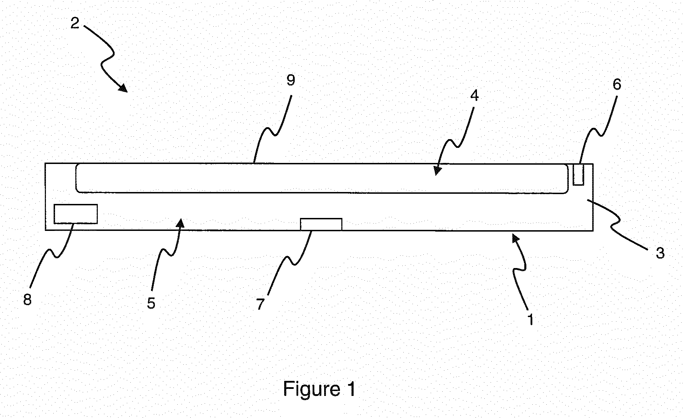

Referring to Figure 1, there is shown schematically an electronic device 1 comprising an example of apparatus 2 for operating the electronic device 1.

The electronic device 1 includes a housing 3 having a first face 4 and an opposing second face 5. In normal use, the first face 4 is the front face of the electronic device 1 and the second face 5 is the rear face of the electronic device 1.

In this example, the apparatus 2 includes a first temperature sensor (or detector) 6, herein referred to as an ambient temperature sensor 6, and a second temperature sensor (or detector) 7, herein referred to as a touch temperature sensor 7. In other examples, the apparatus 2 may include more than one ambient temperature sensor and/or more than one touch temperature sensor.

Each temperature sensor 6, 7 is a device configured to measure or at least obtain a measure of the temperature of the surface of the housing 3 it is underneath or adjacent. Each temperature sensor 6, 7 may be, for example, a thermometer or a positive temperature coefficient sensor, etc.

The ambient temperature sensor 6 is provided so as to measure or at least obtain a measure of the ambient temperature of the electronic device 1. Therefore, conveniently, the ambient temperature sensor 6 may be located beneath and/or adjacent a surface of the housing 3 that is less likely or unlikely to be contacted by a user during normal use of the electronic device 1. A good location is at the front of the device 1, for example beneath the front face 4 and towards a side edge of the electronic device 1.

The touch temperature sensor 7 is provided so as to measure or at least obtain a measure of the temperature of a surface of the electronic device 1 that is touched by a user during normal use of the electronic device 1. Therefore, conveniently, the touch temperature sensor 7 may be located beneath and/or adjacent a surface of the housing 3 that is more or very likely to be contacted by a user during normal use of the electronic device 1. A good location is at the rear of the device 1, for example beneath the rear face 5 and towards the centre of the rear face 5 of the electronic device 1.

The ambient temperature sensor 6 and the touch temperature sensor 7 are located in positions that are away from one another. Indeed, in this example, the ambient temperature sensor 6 is adjacent an opposing surface of the electronic device 1 to the touch temperature sensor 7. The advantages of such a configuration are discussed below.

A controller 8, such as a microcontroller, is provided within the housing 3 for controlling the operation of the electronic device 1.

The controller 8 is configured in an example to activate the electronic device 1 from an inactive state in response to temperature readings detected by the temperature sensors 6, 7, in a manner that will be explained. The controller is also configured in an example to deactivate the electronic device 1 from an active state in response to temperature readings detected by the temperature sensors 6, 7.

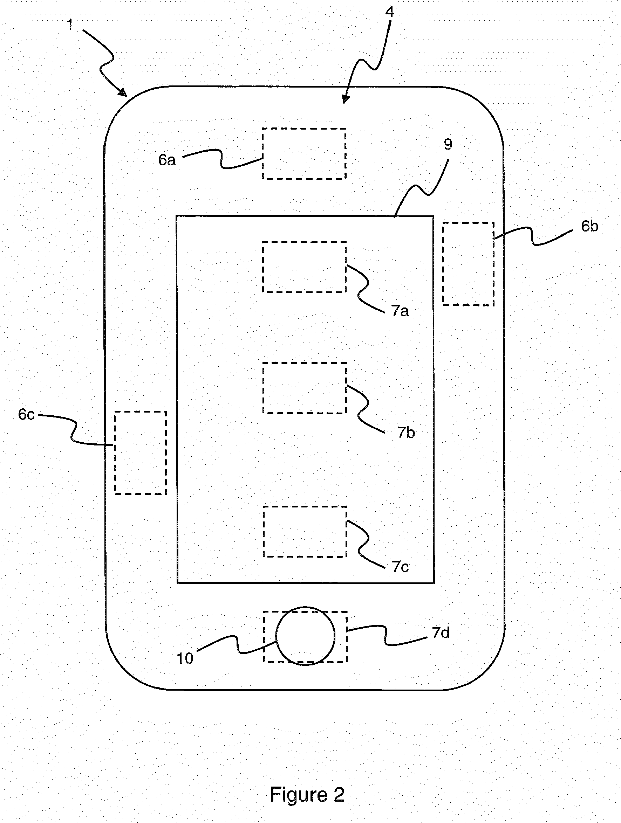

Figure 2 shows examples of different locations for the ambient temperature sensor 6 and the touch temperature sensor 7 within the housing 3 of the electronic device 1.

As can be seen, the electronic device 1 comprises a display screen 9 and a button 10. The display screen 9 may be a touch screen which allows a user to touch the screen 9 to activate certain functions of the electronic device 1, input commands and text, etc. The touch display screen 9 may be for example a capacitive touch screen or a resistive touch screen.

Each of the example locations 6a, 6b, 6c of the ambient temperature sensor 6 corresponds to positions adjacent and/or beneath surfaces of the housing 3 that are unlikely, or at least less likely, to be contacted by a user's hand in normal use of the electronic device 1 or when a user picks up the electronic device 1. A particularly suitable location is 6a, which is located centrally with respect to the side edges of the housing 3, towards the top edge of the housing 3 and beneath the front face 4 of the housing 3, when the electronic device 1 is in a normal "portrait" orientation during normal use.

Each of the locations 7a, 7b, 7c, 7d of the touch temperature sensor 7 correspond to positions adjacent and/or beneath surfaces of the housing 3 that are very likely, or at least more likely, to be contacted by a user's hand in normal use of the electronic device 1 or when a user picks up the electronic device 1. A particularly suitable location is 7b, which is located centrally with respect to the side edges of the housing 3, behind the display screen 9 and beneath the rear second face 5 of the housing 3, when the electronic device 1 is in a normal orientation during normal use.

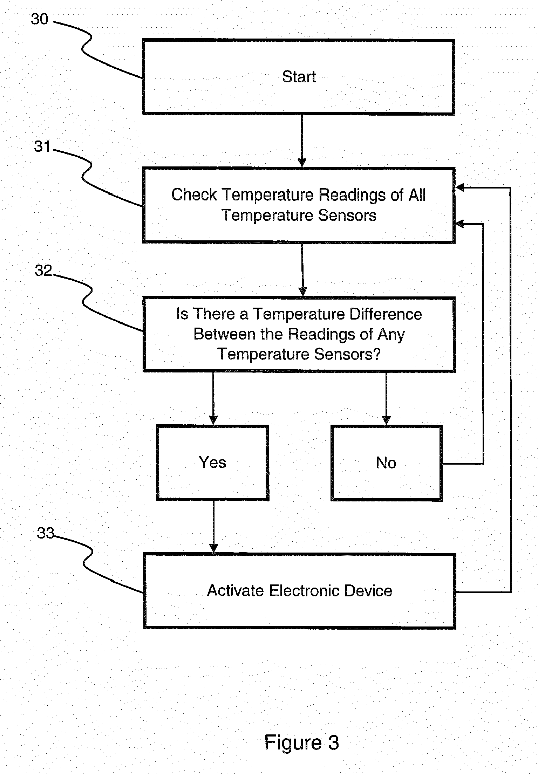

An example of the process of the controller 8 deciding if it should activate an inactive electronic device 1 is shown schematically in Figure 3.

At 30, the electronic device 1 is put into its inactive mode by a user. In its active mode, certain functions/features of the electronic device 1 are switched off in order to conserve battery power.

At 31, the controller 8 checks the temperature readings of all of the temperature sensors.

Therefore, in this example, the controller 8 checks the temperature reading of the ambient temperature sensor 6, which obtains a measure of the temperature of the electronic device 1 at a location on the electronic device that is unlikely to be touched by a user in normal use. The controller 8 also checks the temperature reading of the touch temperature sensor 7, which obtains a measure of the temperature of the electronic device 1 at a location on the electronic device that is likely to be touched by a user in normal use. In this example, the user has touched the touch temperature sensor 7 and so the temperature reading of the touch temperature sensor 7 is 25°C. The user has not touched the ambient temperature sensor 6 and so the temperature reading of the ambient temperature sensor 6 is 18°C.

At 32, the controller 8 then compares the temperature readings of the temperature sensors to ascertain if there is a difference between them that is larger than a pre-determined threshold.

If the controller 8 detects that there is a difference between the temperatures detected by the temperature sensors larger than a pre-determined threshold, then, at 33, the controller 8 activates the electronic device 1 to bring it out of its inactive state and into its active state. The process shown schematically in Figure 3 then stops.

The pre-determined threshold is used to prevent the electronic device 1 from being activated by minor variations in the temperature measured by the sensors.

If the controller 8 determines that there is no difference between the temperatures detected by the temperature sensors, or if the temperatures difference is smaller than the pre-determined threshold, the process reverts to 31 and the controller 8 again checks the temperature readings of the sensors.

The controller 8 continues to check the temperature readings of the temperature sensors until a temperature difference large enough to overcome the pre-determined threshold is detected, at which point the controller 8 activates the electronic device 1 to bring it out of its inactive state and into its active state. The process shown schematically in Figure 3 then stops.

A suitable threshold can be found by experiment. In this example, the predetermined threshold is 3°C. In other examples it may be any other suitable temperature from, for example, 0.5°C to say 5°C or 10°C or so.

The controller 8 thus compares the temperature of 25°C detected by the touch temperature sensor 7 with the temperature of 18°C detected by the ambient temperature sensor 6. Since this temperature difference of 7°C is greater than the pre-determined threshold of 5°C, the controller 8 activates the electronic device 1 to bring it out of its inactive state and into its active state.

Accordingly, if a user picks up the electronic device 1, the heat from their hand will increase the temperature of the second face 5 of the housing 3. At the same time, the temperature of the first face 4 of the housing 3 remains the same or at least approximately the same and does not increase (at least significantly) because the first face 4 is untouched by the user. This causes the touch temperature sensor 7 to detect an increased temperature relative to the temperature detected by the ambient temperature sensor 6. In response, if the detected temperature difference is larger than the pre-determined threshold temperature, the controller 8 activates the electronic device 1.

Using more than one temperature sensor allows for the controller 8 to activate the electronic device 1 based on a temperature difference between temperature sensors rather than based on a simple temperature increase detected by a sensor. Activation of the electronic device 1 based on a temperature difference rather than on an absolute temperature reduces the likelihood of the controller 8 activating the electronic device 1 accidentally just because for example the electronic device 1 as a whole has become warmed (for example, because of being warmed in the sun).

In addition, positioning the temperature sensors at different locations of the housing 3 allows for the controller 8 to activate the electronic device 1 based on a temperature differential between distinct areas or surfaces of the housing 3. In the above example, the ambient temperature sensor 6 and the touch temperature sensor 7 are spaced away from one another and located on opposing faces of the housing 3. This assists in the reliability of the controller 8 activating the electronic device 1 when a user wants it to be activated because, when picking up the electronic device 1, it is more likely that the user will contact the touch temperature sensor 7 and avoid the ambient temperature sensor 6, creating a temperature differential between the spaced apart temperature sensors and causing the controller 8 to activate the electronic device 1.

In an example, the controller 8 may also be configured to deactivate the electronic device 1 from its active state to its inactive state if it detects that there is no difference between the temperature readings of the ambient temperature sensor 6 and the touch temperature sensor 7, or if the temperature difference is smaller than the pre-determined threshold temperature. In an example, if a user releases the electronic device 1 from their hand whilst it is in its active state, the controller 8 will determine that there is no (significant) temperature difference between the readings of the ambient temperature sensor 6 and the touch temperature sensor 7 and, in response, deactivate the electronic device 1.

Accordingly, with the example described above, a user is able to easily, intuitively and reliably activate an electronic device 1 from its inactive state. This can be done, for example, by a user simply picking up the electronic device 1. The above example also mitigates at least some of the disadvantages of the prior art, such as unwanted or accidental activation. Therefore, a user may be more motivated to put their electronic device 1 into its standby mode, which reduces consumption of its battery and could ultimately reduce the amount of energy used in charging electronic devices.

The example described herein is to be understood as an illustrative example of an embodiment of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating an electronic device, the method comprising:
when the electronic device is in an inactive state:
obtaining a measure of a first temperature of the electronic device corresponding to a temperature of a surface of the electronic device touched by a user;
obtaining a measure of a second temperature of the electronic device corresponding to an ambient temperature of the electronic device;
comparing the first temperature and the second temperature; and
activating the electronic device if a difference between the first temperature and the second temperature is larger than a predetermined threshold.

2. A method according to claim 1, comprising:
when the electronic device is in an inactive state and the difference between the first temperature and the second temperature is smaller than a predetermined threshold:
repeating the steps of obtaining a measure of the first temperature of the electronic device; obtaining a measure of the second temperature of the electronic device; comparing the first temperature and the second temperature; and activating the electronic device if a difference between the first temperature and the second temperature is larger than a predetermined threshold.

3. A method according to claim 1 or claim 2, comprising:
when the electronic device is in an active state:
obtaining a measure of a first temperature of the electronic device corresponding to a temperature of a surface of the electronic device touched by a user;
obtaining a measure of a second temperature of the electronic device corresponding to an ambient temperature of the electronic device;
comparing the first temperature and the second temperature; and
deactivating the electronic device if a difference between the first temperature and the second temperature is smaller than a pre-determined threshold.

4. A method according to any of claims 1 to 3, the electronic device having a front face having a display screen and a rear face, wherein the first temperature sensor is located at a rear face of the electronic device, when in a normal orientation in normal use.

5. A method according to any of claims 1 to 4, wherein the second temperature sensor is located at the front face of the electronic device.

6. A method according to claim 5, wherein the second temperature sensor is located at or towards the top edge of the device when in a normal orientation in normal use.

7. Apparatus for operating an electronic device, the apparatus comprising:
a first temperature sensor constructed and arranged to obtain a measure of a first temperature of the electronic device corresponding to a temperature of a surface of the electronic device touched by a user;
a second temperature sensor constructed and arranged to obtain a measure of a second temperature of the electronic device corresponding to an ambient temperature of the electronic device;
and a controller configured to: compare the first temperature and the second temperature; and, when the electronic device is an inactive state, activate the electronic device if a difference between the first temperature and the second temperature is larger than a pre-determined threshold.

8. Apparatus according to claim 7, wherein the controller is configured to: when the electronic device is in an inactive state and the difference between the first temperature and the second temperature is smaller than a pre-determined threshold, compare a new first temperature and a new second temperature; and activate the electronic device if a difference between the new first temperature and the new second temperature is larger than a pre-determined threshold.

9. Apparatus according to claim 7 or claim 8, wherein the controller is configured to: when the electronic device is in an active state, compare a first temperature and a second temperature; and deactivate the electronic device if a difference between the first temperature and the second temperature is smaller than a pre-determined threshold.

10. An electronic device comprising apparatus according to any of claims 7 to 9.

11. An electronic device according to claim 10, the electronic device having a front face having a display screen and a rear face, wherein the first temperature sensor is located at a rear face of the electronic device, when in a normal orientation in normal use.

12. An electronic device according to claim 10 or claim 11, wherein the second temperature sensor is located at the front face of the electronic device.

13. An electronic device according to claim 12, wherein the second temperature sensor is located at or towards the top edge of the device when in a normal orientation in normal use.
